Europäisches Patentamt

European Patent Office

Office européen des brevets

(19)

(11) **EP 1 418 477 A1**

(12) ## EUROPEAN PATENT APPLICATION

(43) Date of publication:
**12.05.2004 Bulletin 2004/20**

(51) Int Cl.7: **G05B 17/02**, H02J 3/24, H02J 3/18

(21) Application number: **02405956.0**

(22) Date of filing: **06.11.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **ABB RESEARCH LTD.**<br>**8050 Zürich (CH)**<br><br>(72) Inventors:<br>• **Gallestey, Eduardo Alvarez**<br>**5522 Tägerig (CH)** | • **Rehtanz, Christian**<br>**5405 Baden-Dättwil (CH)**<br><br>(74) Representative: **ABB Patent Attorneys**<br>**c/o ABB Schweiz AG,**<br>**Intellectual Property (CH-LC/IP),**<br>**Brown Boveri Strasse 6**<br>**5400 Baden (CH)** |

(54) **Method for controlling an electric power transmission network**

(57) A method for the control of an electric power transmission network comprises the repeated execution of the steps of

• measuring measured variables (y) that represent electrical and other physical conditions of the network,
• representing the network as a mixed logical dynamic system model, said model comprising

 ■ a continuous state (x), whose change is expressed as a function of measured variables (y), control variables (u), a discrete state (d,δ),
 ■ a model of the dynamic behaviour of the network, wherein the continuous state (x), is expressed as a first function of time (t), the continuous state (x), control variables (u), a discrete state (d,δ), and continuous variables (z), and
 ■ constraints on the operation of the network,

• executing a model predictive control method, based on said network representation, that determines a sequence of control values (u) for which a given cost function (J[u]) is minimised,
• applying at least a first set of the sequence of control values (u) to the network.

**Fig. 1**

## Description

### Field of the Invention

The invention relates to large-scale electric power transmission networks, and, more particularly, to a method, computer program and data processing system for the control of an electric power transmission network as described in the preamble of claim 1, 7 and 8, respectively.

### Background of the Invention

Electric power transmission and distribution systems or networks comprise high-voltage tie lines for connecting geographically separated regions, and substations for transforming voltages and for switching connections between lines. Power generation and load flow in a network with several substations is controlled by a central energy management (EMS) system. An important issue in the control of power generation and load flow is to keep the network stable, i.e. to avoid voltage collapses and swings, while still providing the required power to consumers. Existing control and protection systems, as described, for example, in *Kundur, P.; et al.: "Voltage stability assessment, procedures and guides" IEEE/PES Power System Stability Subcommittee Special Publication, 1999, chapter 4,* determine a numeric value that represents network stability, and if this value reaches a critical limit, shed loads or increase generation in order to maintain stability. However, such systems are only applicable when the network is in a slowly changing quasi steady state condition.

### Description of the Invention

It is therefore an object of the invention to create a method, computer program and data processing system for the control of an electric power transmission network of the type mentioned initially, which overcomes the disadvantages mentioned above.
These objects are achieved by a method, computer program and data processing system for the control of an electric power transmission network according to the claims 1, 7 and 8, respectively.
The inventive method for the control of an electric power transmission network comprises the repeated execution of the steps of

- measuring measured variables that represent electrical and other physical conditions of the network,
- representing the network as a mixed logical dynamic system model, said model comprising

  - ■  a continuous state, measured variables, control variables, a discrete state,
  - ■  a model of the dynamic behaviour of the network and
  - ■  constraints on the operation of the network,

- executing a model predictive control method, based on said network representation, that determines a sequence of control values for which a given cost function is minimised,
- applying at least a first set of the sequence of control values to the network.

This allows taking into account the dynamic behaviour of the network when determining control actions. This is highly advantageous, since instabilities occur typically after cascaded contingencies or faults, i.e., when the system is not in a stationary condition. This transient state is a dynamic process of several seconds up to tens of minutes. During such transients, traditional stability indicators based on steady state system models and on data coming from SCADA/EMS (Energy Management) systems only providing data on a steady state basis, have no real meaning and do not allow correct decisions for stabilising the system.
The computer program for the control of an electric power transmission network according to the invention is loadable into an internal memory of a digital computer, and comprises computer program code means to make, when said computer program code means is loaded in the computer, the computer execute the method according to the invention. In a preferred embodiment of the invention, a computer program product comprises a computer readable medium, having the computer program code means recorded thereon.
A data processing system for the control of an electric power transmission network according to the invention comprises means for carrying out the steps of the method according to the invention. In a preferred embodiment of the invention, the data processing system is an apparatus comprising a data processor, a memory coupled to the processor and computer program code means stored in said memory, where said computer program code means, when executed by the processor, causes the method according to the invention to be executed.

Further preferred embodiments are evident from the dependent patent claims.

**Brief Description of the Drawings**

The subject matter of the invention will be explained in more detail in the following text with reference to preferred exemplary embodiments, which are illustrated in the attached drawings, in which:

Figure 1         schematically shows a simple power network topology;
Figures 2 and 3    show voltage trajectories over time for a network controller working according to he invention.

The reference symbols used in the drawings, and their meanings, are listed in summary form in the list of reference symbols. In principle, identical parts are provided with the same reference symbols in the figures.

**Detailed Description of Preferred Embodiments**

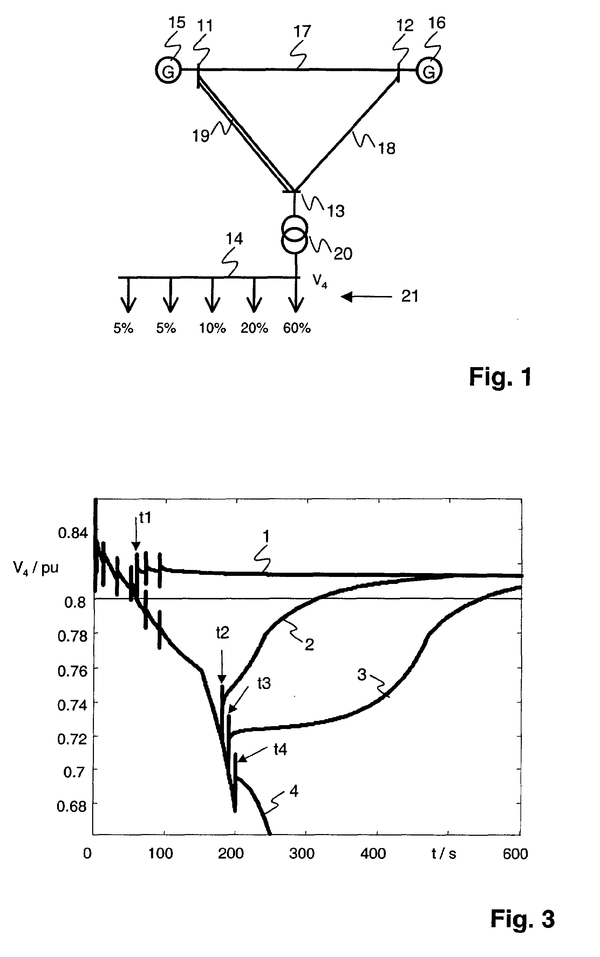

Figure 1 schematically shows a simple power network topology with three buses 11, 12, 13 connected by lines 17,18,19, one of which is a double line 19, two generators 15,16, an under load tap changer (ULTC) transformer 20 and a number of loads 21 connected to a fourth bus 14. Typical power transmission networks have tens to several hundreds of buses, lines, generators etc.

The invention is made possible by the advent of measurement devices that are distributed throughout the network and are arranged to communicate synchronised measured voltage and current values to e.g. a central processing unit. Such a plurality of synchronised measurement devices allows a complete dynamic view of the underlying dynamic systems, and makes it possible to implement sophisticated methodologies for power grid control.

In a preferred embodiment of the invention, the measurement devices are phasor measurements units (PMU). PMUs are located, for example, at a feeder, at the bay level of substations, or at branching points along transmission lines. A voltage phasor represents, for example, a voltage of the feeder or line, while a current phasor represents current flowing through the feeder or line.

The phasor data represents a phasor and may be a polar number, the absolute value of which corresponds to either the real magnitude or the root mean square (RMS) value of a quantity, and the phase argument to the phase angle at zero time. Alternatively, the phasor may be a complex number having real and imaginary parts or the phasor may use rectangular or exponential notation. By contrast, conventional sensing devices used in power networks generally measure only scalar, average representations, such as the RMS value of a voltage, current etc.

In the inventive method, the phasor data is collected from phasor measurement units that are located remotely from each other and from the central processing unit, i.e. they are distributed over a large geographic area, such as over tens to hundreds of kilometres. Since the phasor data from these disparate sources are analysed in conjunction, they must refer to a common phase reference. In other words, the different phasor measurement units must have local clocks that are synchronised to within a given precision. Such a synchronisation of the phasor measurement units is preferably achieved with a known time distribution system, for example the global positioning (GPS) system. In a typical implementation, the phasor data is determined at least every 200 or every 100 or preferably every 40 milliseconds, with a temporal resolution of preferably less than 1 millisecond. Each measurement is associated with a time stamp derived from the synchronised local clock. The phasor data therefore comprises time stamp data.

The current and voltage measurements are optionally complemented by other measurements representing generator speeds, produced power, etc.

The entirety of measured variables is represented as a set or vector y and serves as in input to a mathematical model of the network. According to the invention, the model is a mixed logical dynamic (MLD) system comprising both continuous and discrete states. The principles of MLD modelling are described in *Bemporad, M. Morari, " Control of systems integrating logic, dynamics, and constraints", Tech. Report AUT98-04, ETH, Automatica, Special issue on hybrid systems, Vol. 35, n. 3, p. 407-427, 1999.*

The MLD model is used in a model predictive control (MPC) method which determines control variables u that are applied to the power network in order to maintain stability and optimise network performance according to given criteria. The MLD model comprises a model of the dynamic behaviour of the power network, in particular with time constants in the range from seconds to minutes. This allows to model the power system during a transient phase after one or more contingencies, and to determine appropriate stabilising actions before or after contingencies occur.

According to the invention, a power system is modelled originally by a system of algebraic and differential equations of the following form.

$$x' = f(t,x,u,d,z)$$
$$y = c(t,x,u,d,z) \tag{1}$$
$$0 \le h(t,x,u,d,z)$$

where

$t$    represents time.

$x$    is a vector of continuous state variables, representing physical entities with continuous variable magnitudes, e.g. voltages, currents, generator speeds, phase angles, etc. $x'$ is the time derivative of $x$.

$u$    is a vector of control variables available to regulate the system. Magnitude values are continuous or discrete, according to the associated physical control. Continuous controls are the power output of generators, power consumption of variable loads, reactive power injection by FACTS devices, etc. Discrete controls correspond to loads or lines that can be switched on or off, transformer tap changer position, etc.

$y$    is the vector of measured variables, again with continuous or discrete magnitudes. For example, voltages and currents at certain nodes, generator speeds, power switch or breaker positions etc.

$d$    is a vector of discrete variables representing discrete system states such as the position of automatically controlled transformer tap changers, an on-off state of the generators, load shedding at busses, etc.

$z$    is a vector of continuous variables, which enter the system only algebraically. These are e.g. currents or voltages that depend on the other variables by static i.e. algebraic relations such as Kirchhoff's law.

The first equation in (1) is a differential equation. Together with the second equation in (1), it describes the dynamics of the system. The third equation represents equality and inequality constraints on the operation of the network. Equality constraints represent e.g. voltage and current balances according to Kirchhoff's laws, power balance equations, etc. Inequality constraints represent e.g. ramp constraints for power generation, a maximum number of possible transformer tap changes per time unit, limits to fast, short peaks in power generation based on spinning reserve, etc.

The mathematical model described represents the power system dynamics in the range of several seconds to a few minutes. The equality constraints must be well posed such that they uniquely define $d$ and $z$ when $x$ and $u$ are given, as explained in *Bemporad et al.* cited above.

According to the invention, the system described by the model (1) is driven with a sequence of control values $u^* : [t, t + T] \mapsto R^m$ such that certain predetermined functional $J$ is minimised.

$$J[u] = \int_t^{t+T} l(x, y, d, u)\, d\tau \tag{2}$$

subject to the constraints of (1). At every time $t$ the corresponding control sequence $u^* : [t, t + T] \mapsto R^m$ is computed and a first set or vector of the sequence, i.e. the control $u^*(t)$ for the time $t$, is applied to the actual system. This kind of control determination is known in the literature under the name of receding horizon control and/or model predictive control.

According to a preferred embodiment of the invention, the problem of minimizing (2) subject to (1) is simplified and stated within the mixed logical dynamic systems approach. This implies bringing the model (1) to the MLD form, i.e.:

$$x(t + \Delta t) = Ax(t) + B_1 u(t) + B_2 \delta(t) + B_3 z(t)$$
$$y(t) = Cx(t) + D_1 u(t) + D_2 \delta(t) + D_3 z(t) \tag{3}$$
$$E_2 \delta(t) + E_3 z(t) \le E_1 u(t) + E_4 x(t) + E_5$$

where $A, B_1, B_2, B_3,..., E_5$ are matrices of appropriate dimensions. For simplicity, the variable names $x, u, y, z$ of equation (1) are kept, while the discrete state d is relabelled as $\delta$. The meaning of the variables remains the same in principle, but the actual values differ. The differential equation is replaced by a linear difference equation for x.

In both (1) and (3), a change in the continuous state $x$, i.e. a differential or a difference, respectively, is expressed as a first function of time t, the continuous state $x$, control variables $u$, a discrete state $d,\delta$, and continuous variables $z$. The measured variables ($y$) are expressed by a second function of the same variables.

Further, the integral in Equation (2) is rewritten in time-discrete form as well, i.e. as a sum over the time steps contained in the receding horizon, i.e.

$$J[u] = \sum_{i=t}^{t+T} l(x(i),u(i),\delta(i),z(i)) \qquad (4)$$

The target functional $J = J[u]$ is rewritten such that $J$ is a finite sum of terms containing only 2-norms and/or infinity norms of affine forms *on* $x$ and $u$, i.e,.

$$J[u] = \sum_{i=t}^{t+T_1} \left\| l_i^2(x(i),u(i),\delta(i),z(i)) \right\|_2 + \sum_{i=1}^{t+T} \left\| l_i^{\infty}(x(i),u(i),\delta(i),z(i)) \right\|_{\infty} \qquad (5)$$

where the functions $l_j^2, l_i^{\infty}$ are vectors of affine functions of their arguments.

The actual form of $J$ depends on the goals of the optimisation. In a preferred embodiment of the invention; the goal is to reach voltage stability while keeping the number of transformer tap changes to a minimum. Then an appropriate, but not unique, way to define J is

$$J = \sum_{i=t}^{t+T} |V(i) - V_0| + |u(i+1) - u(i)| \qquad (6)$$

where $V$ is a vector of voltages, $V_0$ is a reference voltage, and $u$ is a vector of tap positions.

An advantage when using the MLD description in the form of equation (3) is that minimising the functional (5) subject to (3) leads to Mixed Integer Linear/Quadratic Programming Problems, which can be solved efficiently with existing software packages such as ILOG CPLEX™.

The optimisation determines a solution that satisfies the system model equations. That is, the network, when controlled according to the solution, remains stable. However, if the network is operated in state close to instability, modelling errors might cause it to become unstable anyway. Therefore, in a preferred embodiment of the invention, a safety margin with respect to voltage stability is introduced. This is done by introducing a vector of additional factors $\mu_i$, with values of e.g. 1.005 to 1.02 where each factor multiplies one or more loads of the system.

$$x' = f(t,x,u,d,z,\mu)$$
$$y = c(t,x,u,d,z,\mu) \qquad (7)$$
$$0 \le h(t,x,u,d,z,\mu)$$

The equations (3) are modified in an analogous fashion. As a result, each actual load is modelled as a slightly higher load and perceived by the optimisation method as higher as well. The solution found by the optimisation now is guaranteed to be stable, even if the actual loads increase unexpectedly or are higher than modelled - to within the higher value according to the factor $\mu_i$. This minimum load increase, if it is taken to be the same for all loads, corresponds to a power margin of the system. For example, a factor 1.02 corresponds to a power margin of 2 percent, that is, load increase of 2% is possible until stability is lost.

The MPC approach finds appropriate actions and time-points at which actions must be taken to stabilize the system and keep it within the power margin. Known approaches would wait until the power margin is too low and then take actions. Such an action would be too late to stop the dynamic process from moving to an unstable state. The invention incorporates both a stability margin and the determination of stabilizing actions. System dynamics are represented with time constants ranging from e.g. one second to 10 minutes, and accordingly taken into account.

An application of the invention to the simple network of Figure 1 is shown. Control actions applicable to the network are changes to the tap position of the Under Load Tap Changing Transformer (ULTC) 20 and selective shedding of one or more of the loads 21. The ULTC 20 has a base tap ratio of 1 and can make steps of width 0.02 from a tap ratio of 0.9 up to a limit of 1.1. The minimum time between two steps is 20 seconds. The transformer 20 can be blocked in each of these positions in order to achieve system stabilisation. The loads 21 are modelled with a voltage dependency with dynamic recovery characteristic over time. These loads are separated into different blocks, which can be shed individually in order to stabilize the system. The generators are modelled with 4th order models including excitation systems, voltage regulation and reactive power limits according to standard IEEE models.

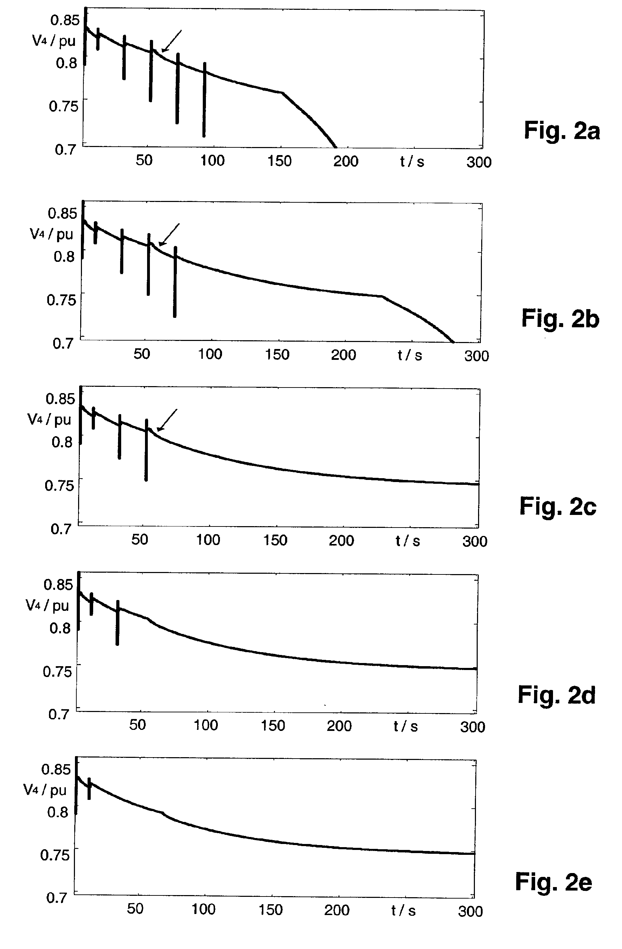

Consider the following scenario: The system is in a stable situation. A contingency of tripping off one of the double lines 19 causes a slow term voltage collapse. This in turn causes the local controller of the ULTC to automatically increase the tap ratio in order to maintain the voltage $V_4$ at the fourth bus 14. As shown in figure 2a, this is successful in the short term, i.e. the first one or two minutes, but in the long term, after 150 seconds, the voltage collapses even faster.

The MPC algorithm applied according to the invention determines the time when transformer blocking should be effected, avoiding collapse and keeping the voltage $V_4$ as high as possible. The optimisation criterion therefore is to keep the voltage V4 at the fourth bus 14 close to the nominal level, as expressed by the goal function

$$J = \sum_{i=t}^{t+T} \left| V_4(i) - V_{4,0} \right| \tag{8}$$

A blocking after the third step of tapping is found to be optimal, as shown in figure 2c. The transformer starts with a tap ratio of 1.0 and taps to 1.02, 1.04, 1.06 after which further tapping is blocked.

If the number of tapping actions should also be minimised, this criterion is included in the target function, e.g. as

$$J = \sum_{i=t}^{t+T} a \cdot \left| V(i) - V_0 \right| + b \cdot \left| u(i+1) - u(i) \right| \tag{9}$$

This results in an earlier blocking of tapping, but at the price of a lower voltage level, shown in figures 2d and 2e. The exact result depends on the relative weighting of the two terms by the weighting factors *a,b*.

In a further example, load shedding as control action is also allowed. Furthermore, an additional constraint is included in the system equations (1) or (3) to allow only a voltage $V_4 >= 0.8$ pu. This is necessary in practice in order to prevent autonomous under voltage relays from tripping. In order to satisfy this constraint, additional actions must be taken. Load shedding is an undesired action and should be effected as late as possible and with a minimum amount of load being shed. Load shedding can e.g. be effected only when tapping has reached saturation. The equation J is modified according in the following way, with the last term representing the amount of load being shed.

$$J = \sum_{i=t}^{t+T} a \cdot \left| V(i) - V_0 \right| + b \left| u(i+1) - u(i) \right| - c \cdot \sum_{loads} P_{loads}(i) \tag{10}$$

The first voltage trajectory 1 in Figure 3 is the result of the optimisation subject to this target function. Load shedding is carried out at time t1 just before the voltage falls below the 0.8 pu boundary. The minimum amount of load of 5% is shed. Transformer tapping is done up to the final value of 1.1 in order to restore the voltage at the highest possible level. In comparison to the simulation in Figure 2, where the tapping causes the collapse, no blocking is necessary thanks to load shedding.

If the constraint $V_4 >= 0.8$ pu is *not* incorporated, then the application of the MPC method results in shedding the load at the latest possible time t3. A third trajectory 3 in figure 3 shows the result. The target function is the same as before, i.e. according to equation 10. The voltage decreases until the system is just before collapse. After load shedding, the system recovers up to the steady state voltage.

A second trajectory 2 shows an earlier load shedding time t2 with faster recovery and therefore better overall voltage conditions. This can be achieved by increasing the weighting factor *'a'* for the voltage condition in J. A fourth trajectory 4 shows the effect of shedding load shedding too late, at time t4, e.g. when a manual or automatic stability detection and load shedding without prediction is implemented.

**Claims**

1. A method for the control of an electric power transmission network, **characterised in that** the method comprises the repeated execution of the steps of

   • measuring measured variables ($y$) that represent electrical and other physical conditions of the network,
   • representing the network as a mixed logical dynamic system model, said model comprising

      ■ a continuous state ($x$), whose change is expressed as a function of measured variables ($y$), control variables ($u$), a discrete state ($d,\delta$),
      ■ a model of the dynamic behaviour of the network, wherein the continuous state ($x$), is expressed as a first function of time ($t$), the continuous state ($x$), control variables ($u$), a discrete state ($d,\delta$), and continuous variables ($z$), and
      ■ constraints on the operation of the network,

   • executing a model predictive control method, based on said network representation, that determines a sequence of control values ($u$) for which a given cost function ($J[u]$) is minimised,
   • applying at least a first set of the sequence of control values ($u$) to the network.

2. Method according to claim 1, **characterised in that** the constraints comprise equalities representing at least one of power balance equations, current balance equations or voltage balance equations.

3. Method according to claim 1, **characterised in that** the constraints comprise inequalities representing at least one of maximum number of tap changes per time unit, ramp constraints on power generation, or power generation from a spinning reserve.

4. Method according to claim 1, **characterised in that** the constraints comprise inequalities representing a minimum voltage ($V_4$) to be maintained at one or more buses.

5. Method according to claim 1, **characterised in that** the cost function ($J[u]$) comprises a cost for a number of transformer tap changes.

6. Method according to claim 1, **characterised in that** the mixed logical dynamic system model comprises predetermined factors ($\mu_i$) that one or more modelled loads are multiplied with.

7. Computer program for the control of an electric power transmission network which is loadable and executable on a data processing unit and which computer program, when being executed, performs the steps according to one of the preceding claims.

8. Data processing system for the control of an electric power transmission network comprising means for carrying out the steps of the method according to any one of the claims 1 to 6.

**Fig. 1**

**Fig. 3**

**Fig. 2a**

**Fig. 2b**

**Fig. 2c**

**Fig. 2d**

**Fig. 2e**

**European Patent Office**

## EUROPEAN SEARCH REPORT

Application Number

EP 02 40 5956

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BEMPORAD A ET AL: "Piecewise linear optimal controllers for hybrid systems" PROCEEDING OF THE AMERICAN CONTROL CONFERENCE, vol. 2, June 2000 (2000-06), pages 1190-1194, XP010516842 Chicago * page 1190 - page 1192 * | 1,2,6-8 | G05B17/02 H02J3/24 H02J3/18 |
| Y | * page 1190 - page 1192 * --- | 3-5 | |
| X | KERRIGAN E C ET AL: "Multi-objective prioritisation and reconfiguration for the control of constrained hybrid systems" PROCEEDING OF THE AMERICAN CONTROL CONFERENCE, June 2000 (2000-06), pages 1694-1698, XP010518197 Chicago * page 1694 - page 1695 * --- | 1,2,6-8 | |
| X | BERNPORAD A ET AL: "The explicit solution of model predictive control via multiparametric quadratic programming" PROCEEDING OF THE AMERICAN CONTROL CONFERENCE, June 2000 (2000-06), pages 872-876, XP010516778 Chicago * page 872 - page 873 * --- | 1,2,6-8 | TECHNICAL FIELDS SEARCHED (Int.Cl.7) H02J |
| Y | US 5 081 591 A (HANWAY JAMES E ET AL) 14 January 1992 (1992-01-14) * column 1, line 32 - column 3, line 40 * --- | 3-5 | |
| A | US 5 422 561 A (PHAM BRYAN H ET AL) 6 June 1995 (1995-06-06) * claims 14,47,73,76 * --- | 3-5 | |
| | -/-- | | |

The present search report has been drawn up for all claims

| Place of search | Date of completion of the search | Examiner |
|---|---|---|
| MUNICH | 10 March 2003 | BURCHIELLI, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 02 40 5956

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 134 867 A (ABB POWER AUTOMATION AG) 19 September 2001 (2001-09-19) * the whole document * ----- | 1-8 | |
| | | | **TECHNICAL FIELDS SEARCHED (Int.Cl.7)** |

The present search report has been drawn up for all claims

| Place of search | Date of completion of the search | Examiner |
|---|---|---|
| MUNICH | 10 March 2003 | BURCHIELLI, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 40 5956

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2003

| Patent document cited in search report | | Publication date | Patent family member(s) | | Publication date |
|---|---|---|---|---|---|
| US 5081591 | A | 14-01-1992 | FR | 2658930 A1 | 30-08-1991 |
| | | | JP | 4217817 A | 07-08-1992 |
| US 5422561 | A | 06-06-1995 | NONE | | |
| EP 1134867 | A | 19-09-2001 | EP | 1134867 A1 | 19-09-2001 |
| | | | JP | 2001268794 A | 28-09-2001 |
| | | | US | 2001021896 A1 | 13-09-2001 |

EPO FORM P0459